# FASCICULE DE BREVET EUROPEEN

(11) **EP 2 399 087 B1**
(45) Date de publication et mention de la délivrance du brevet: **09.01.2013**
(21) Numéro de dépôt: 10708236.4
(22) Date de dépôt: 15.02.2010
(51) Int. Cl.: F25B 21/00

(54) **GENERATEUR THERMIQUE MAGNETOCALORIQUE**
MAGNETOKALORISCHER WÄRMEERZEUGER
MAGNETOCALORIC HEAT GENERATOR

(30) Priorité: 17.02.2009 FR 0951022
(43) Date de publication de la demande: 28.12.2011
(73) Titulaire: Cooltech Applications S.A.S., 67810 Holtzheim (FR)
(72) Inventeur: HEITZLER, Jean-Claude, F-68180 Horbourg Wihr (FR); MULLER, Christian, F-67000 Strasbourg (FR)
(74) Mandataire: Koelbel, Caroline
(86) Numéro de dépôt international: PCT/FR2010/000126
(87) Numéro de publication internationale: WO 2010/094854

(56) Documents cités:
- WO-A-2005/103585

## Description

### Domaine technique:

La présente invention concerne un générateur thermique magnétocalorique comprenant au moins deux éléments magnétocaloriques disposés de manière successive et formant au moins deux étages thermiques consécutifs, traversés par des fluides caloporteurs distincts, et comportant chacun deux extrémités opposées, un arrangement magnétique destiné à soumettre chaque élément magnétocalorique à un champ magnétique variable, créant alternativement, dans chaque élément magnétocalorique un cycle d'échauffement et un cycle de refroidissement, un moyen d'entraînement desdits fluides caloporteurs à travers lesdits éléments magnétocaloriques alternativement en direction d'une extrémité et en direction de l'extrémité opposée et inversement, de manière synchronisée avec la variation du champ magnétique.

### Technique antérieure:

La technologie du froid magnétique est connue depuis plus d'une vingtaine d'années et on sait les avantages qu'elle apporte en termes d'écologie et de développement durable. On connaît également ses limites quant à sa puissance calorifique utile et à son rendement. Dès lors, les recherches menées dans ce domaine tendent toutes à améliorer les performances d'un tel générateur, en jouant sur les différents paramètres, tels que la puissance d'aimantation, les performances de l'élément magnétocalorique, la surface d'échange entre le fluide caloporteur et les éléments magnétocaloriques, les performances des échangeurs de chaleur, etc.

Afin d'augmenter la puissance d'un générateur thermique magnétocalorique, il est connu d'y intégrer plusieurs éléments magnétocaloriques sous la forme d'une structure étagée, de telle sorte que le fluide sortant d'un élément magnétocalorique est mélangé avec le fluide entrant dans l'élément magnétocalorique suivant pour réaliser un échange thermique et augmenter le gradient de température. Dans une telle configuration, les éléments magnétocaloriques reliés entre eux fluidiquement sont toujours dans le même état magnétique, c'est-à-dire qu'ils sont tous les deux soumis à un champ magnétique ou tous les deux en dehors d'un tel champ magnétique et ceci, de manière alternée.

On connaît des générateurs thermiques présentant une structure étagée, tels que ceux décrits dans la publication WO 2009/087310 du même demandeur, avec plusieurs modules thermiques, comportant chacun un ou plusieurs éléments magnétocaloriques, et dont l'énergie thermique en sortie d'un premier module thermique est transférée à l'entrée d'un second module thermique, et ainsi de suite. Ce type de générateurs présente un certain nombre d'inconvénients.

Un des inconvénients réside dans le transfert d'énergie thermique entre les entrées et sorties des modules thermiques consécutifs. Ce transfert est obtenu en mélangeant les fluides caloporteurs contenus dans les chambres situées aux extrémités correspondantes desdits modules, par exemple. Or, ce mélange nécessite un déplacement de fluide et augmente nécessairement la complexité du générateur ainsi que son prix de revient.

Une solution à cet inconvénient peut consister à utiliser un même moyen d'entraînement pour déplacer le fluide caloporteur dans les chambres en question. Toutefois, cette configuration entraîne un inconvénient inhérent au transfert de fluide caloporteur entre les modules thermiques : il est nécessaire de réaliser des passages pour permettre l'échange de ce fluide, ce qui augmente la complexité du générateur thermique, ne favorise pas un mélange convenable du fluide caloporteur, ne permet pas un échange thermique optimisé entre le fluide sortant d'un élément magnétocalorique et le fluide entrant dans le module thermique suivant, et favorise l'augmentation des pertes de charges.

En outre, la mise en oeuvre des générateurs étagés connus entraîne une difficulté supplémentaire, notamment dans le cas où les modules thermiques utilisés sont destinés à fonctionner dans des plages de températures différentes. En effet, dans le cas d'une structure étagée comportant deux étages, par exemple, l'élément magnétocalorique d'un étage peut fonctionner dans une plage de températures négatives et l'élément magnétocalorique du deuxième étage peut fonctionner dans une plage de températures positives. Il est donc nécessaire d'utiliser un fluide caloporteur adapté, dont le coefficient d'échange et la viscosité sont optimaux dans les deux plages de températures. Or, les fluides caloporteurs actuellement disponibles sur le marché ne présentent pas des caractéristiques optimales sur de larges plages de températures, ce qui nécessite d'opter pour un compromis et ne permet pas une exploitation maximale des capacités thermiques du générateur.

### Exposé de l'invention :

La présente invention vise à pallier ces inconvénients en proposant une solution aux problèmes évoqués ci-dessus. A cet effet, le générateur thermique magnétocalorique selon l'invention est réalisé de telle sorte que sa capacité à produire de la puissance thermique et que le transfert d'énergie thermique entre deux modules thermiques ou éléments magnétocaloriques consécutifs d'une structure étagée sont optimisés.

Dans ce but, l'invention concerne un générateur thermique magnétocalorique du genre indiqué en préambule, caractérisé en ce que lesdits éléments magnétocaloriques sont reliés deux à deux thermiquement au niveau de leurs extrémités consécutives par l'intermédiaire d'un moyen d'échange thermique en contact thermique respectivement avec le fluide caloporteur circulant dans le premier desdits éléments magnétocaloriques et avec le fluide caloporteur circulant dans le second desdits éléments magnétocaloriques.

De manière avantageuse ledit moyen d'échange thermique peut comporter deux zones de transfert reliées thermiquement entre elles, formant un pont thermique. Ces zones de transfert peuvent alors être traversées respectivement par le fluide caloporteur de chacun desdits éléments magnétocaloriques.

De préférence, lesdites zones de transfert peuvent être disposées de manière contigüe aux extrémités correspondantes des deux éléments magnétocaloriques consécutifs.

Dans cette configuration, les zones de transfert peuvent être réalisées en une matière thermiquement conductrice, telle que de l'aluminium ou du cuivre ou leurs alliages, par exemple, et peuvent être munies de passages traversants pour le fluide caloporteur. En variante, lesdites zones de transfert peuvent également être poreuses, de sorte que le fluide caloporteur peut traverser ses pores.

Dans une première variante, les deux zones de transfert dudit moyen d'échange thermique peuvent être reliées entre elles par un corps en une matière thermiquement conductrice.

Dans une seconde variante, les deux zones de transfert dudit moyen d'échange thermique peuvent être reliées entre elles par au moins un caloduc.

Le moyen d'entraînement des fluides caloporteurs peut comporter un actionneur central relié fluidiquement aux extrémités consécutives desdits éléments magnétocaloriques et deux actionneurs d'extrémité montés chacun en regard de l'une des extrémités libres desdits éléments magnétocaloriques.

Pour améliorer l'échange thermique entre les deux fluides caloporteurs, l'actionneur central peut, en outre, être réalisé en un matériau thermiquement conducteur et être en contact avec ledit moyen d'échange thermique.

En variante, ledit actionneur central peut être un piston à double effet réalisé en un matériau thermiquement conducteur et dont la chemise est réalisée en un matériau thermiquement isolant. Dans ce cas, ledit actionneur central peut constituer ledit moyen d'échange thermique.

Le moyen d'entraînement des fluides caloporteurs peut également comporter deux actionneurs centraux reliés fluidiquement chacun à l'une des extrémités consécutives desdits éléments magnétocaloriques et deux actionneurs d'extrémité reliés fluidiquement chacun à l'une des extrémités libres desdits éléments magnétocaloriques.

De manière avantageuse, lesdits moyens de déplacement peuvent être des pistons choisis parmi le groupe comportant des pistons simple effet et des pistons double effet.

En outre, ledit générateur thermique peut comporter un arrangement magnétique apte à assujettir lesdits éléments magnétocaloriques successifs soit constamment dans deux cycles différents, soit constamment dans les mêmes cycles. Par cycle, il faut, bien entendu, comprendre cycle d'échauffement ou cycle de refroidissement.

Enfin, pour exploiter de manière efficace les capacités thermiques de chaque élément magnétocalorique, les fluides caloporteurs traversant lesdits éléments magnétocaloriques peuvent présenter une composition chimique et/ou des propriétés thermiques différentes. Cette composition est, bien entendue, adaptée à chaque élément magnétocalorique, et notamment à sa température de fonctionnement optimum centré sur sa température de Curie.

### Description sommaire des dessins :

La présente invention et ses avantages apparaîtront mieux dans la description suivante de plusieurs modes de réalisation donnés à titre d'exemples non limitatifs, en référence aux dessins annexés, dans lesquels:
- les figures 1A et 1B sont des vues schématiques d'un premier mode de réalisation d'un générateur thermique selon l'invention,
- les figures 2A et 2B sont des vues similaires à celles des figures 1A et 1B représentant un second mode de réalisation d'un générateur thermique selon l'invention,
- les figures 3A et 3B sont des vues similaires à celles des figures 1A et 1B représentant un troisième mode de réalisation d'un générateur thermique selon l'invention,
- les figures 4A et 4B représentent une variante de réalisation du générateur thermique des figures 1A et 1B, et
- les figures 5A et 5B illustrent un autre mode de réalisation.

### Illustrations de l'invention :

Dans les exemples de réalisation illustrés, les pièces ou parties identiques portent les mêmes références numériques.

Les générateurs thermiques 1, 10, 20, 30, 40 comportent chacun deux éléments magnétocaloriques 2, 12 comportant chacun un matériau magnétocalorique. L"invention n'est pas limitée à ce type de configuration et s'étend à plus de deux éléments magnétocaloriques 2, 12, comportant chacun un ou plusieurs matériaux magnétocaloriques. En effet, chaque élément magnétocalorique 2, 12 peut être constitué par plusieurs matériaux magnétocaloriques comportant une température de Curie différente et produisant un effet magnétocalorique important, de sorte que la juxtaposition de plusieurs matériaux magnétocaloriques permet de réaliser un gradient de température élevé entre les extrémités chaude et froide du générateur thermique 1, 10, 20, 30, 40 et donc d'obtenir un rendement encore plus important. Une telle configuration permet également de couvrir une large gamme de températures qui pourra correspondre à la gamme de fonctionnement ou d'utilisation dudit générateur.

Chaque élément magnétocalorique 2 et 12 comporte deux extrémités opposées respectivement 3 et 4, et 13 et 14. Un fluide caloporteur est mis en circulation en direction de l'une ou l'autre desdites extrémités opposées 3, 4 et 13, 14 de chaque élément magnétocalorique 2, 12, selon la variation du champ magnétique. Chaque élément magnétocalorique 2, 12 est traversé par un fluide caloporteur spécifique. Les circuits fluidiques des éléments magnétocaloriques 2, 12 sont séparés de sorte que les fluides caloporteurs ne se mélangent jamais.

Les fluides caloporteurs utilisés peuvent être de composition différente ou identique. Leur composition sera déterminée en fonction des matériaux magnétocaloriques utilisés pour réaliser les éléments magnétocaloriques 2, 12 et de leurs plages de températures de fonctionnement. Ils sont mis en circulation à travers lesdits matériaux magnétocalorique 2, 12 en direction de l'une ou l'autre de leurs extrémités 3 et 4, respectivement 13 et 14 en relation avec la variation dudit champ magnétique de manière à réaliser et à maintenir un gradient de température entre les deux extrémités opposées 3 et 14 du générateur thermique 1, 10, 20, 30, 40.

Afin de faciliter les échanges thermiques avec le fluide caloporteur, les matériaux magnétocaloriques constituant les éléments magnétocaloriques 2, 12 peuvent être poreux de sorte que leurs pores forment des passages de fluide débouchants. Ils peuvent également se présenter sous la forme d'un bloc plein dans lequel des minis ou micro-canaux sont usinés ou encore être constitués par un assemblage de plaques, éventuellement rainurées, superposées et entre lesquelles le fluide caloporteur peut s'écouler. Ils peuvent aussi se présenter sous la forme de poudre ou de particules de sorte que les interstices forment des passages de fluide. Toute autre forme de réalisation permettant au fluide caloporteur de traverser lesdits matériaux magnétocaloriques peuvent, bien entendu convenir.

L'arrangement magnétique (non représenté) peut être constitué par un assemblage d'aimants permanents en mouvement relatif par rapport à chaque élément magnétocalorique 2, 12, par un électroaimant alimenté séquentiellement ou par tout autre moyen analogue susceptible de créer une variation de champ magnétique.

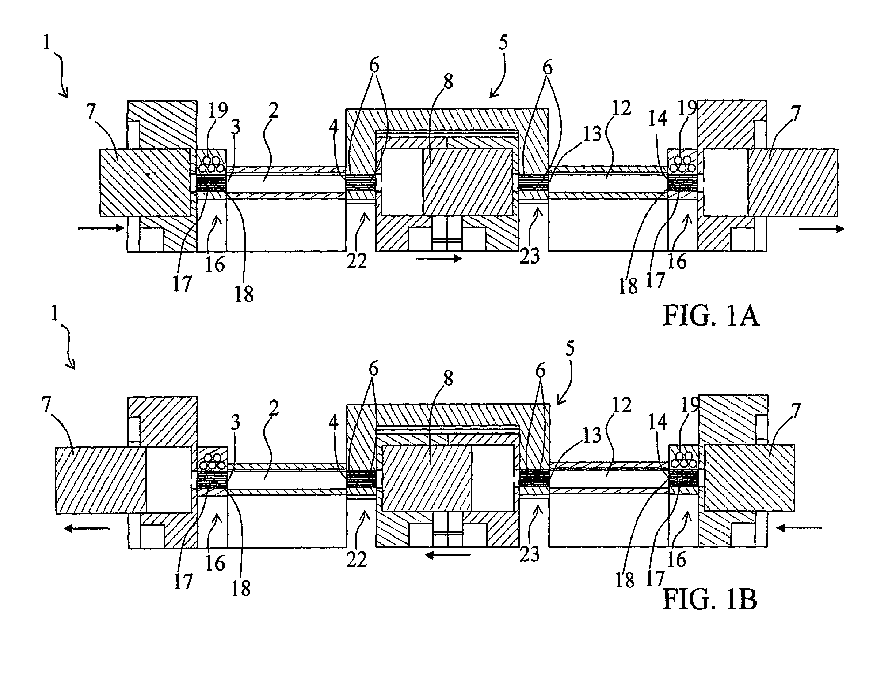

Dans le générateur thermique 1 représenté dans les figures 1A et 1B, les éléments magnétocaloriques 2, 12 sont alignés et forment deux étages thermiques consécutifs. Ils sont toujours tous les deux soumis à la même variation de champ magnétique et se trouvent soit dans un cycle d'échauffement, soit dans un cycle de refroidissement. Ainsi, dans la figure 1A, les éléments magnétocaloriques 2 et 12 sont activés magnétiquement de sorte qu'ils s'échauffent. Le fluide caloporteur est mis en circulation vers la droite sur la figure 1A, dans le sens des flèches représentées. Dans la figure 1B, les éléments magnétocaloriques 2 et 12 sont désactivés magnétiquement de sorte qu'ils se refroidissent. Le fluide caloporteur est mis en circulation vers la gauche sur la figure 1B, dans le sens des flèches représentées.

Les éléments magnétocaloriques 2 et 12 sont reliés thermiquement par un moyen d'échange thermique 5 constitué d'une pièce en forme de U réalisée en une matière thermiquement conductrice et pourvu aux extrémités de ses branches de deux zones de transfert 22 et 23. Chaque zone de transfert 22, 23 comporte des passages traversants 6 permettant la circulation de fluide caloporteur. Ces deux zones de transfert 22 et 23 sont disposées dans le générateur thermique 1, de manière contigüe aux extrémités consécutives 4 et 13 des deux éléments magnétocaloriques 2, 12. Ces zones de transfert 22 et 23 sont ainsi en contact direct avec lesdits éléments magnétocaloriques 2, 12.

Le moyen d'entraînement des fluides caloporteurs comporte d'une part, deux pistons 7 alignés et formant les actionneurs d'extrémité, montés chacun en regard de l'extrémité libre 3, 14 desdits éléments magnétocaloriques 2, 12, ces pistons 7 se déplaçant simultanément dans le même sens pour imprimer un mouvement de va-et-vient aux deux fluides caloporteurs et, d'autre part, un piston 8 à double effet formant l'actionneur central et logé dans le moyen d'échange 5, aligné avec les deux autres pistons 7, relié fluidiquement aux extrémités consécutives 3, 14 desdits éléments magnétocaloriques 2, 12 et se déplaçant dans le même sens que les deux autres pistons 7. Ces pistons 7, 8 sont commandés pour tout moyen connu tel que qu'une came de commande, un champ magnétique variable, un système fluidique ou tout autre moyen analogue.

Ce piston 8 à double effet est intégré entre les deux éléments magnétocaloriques 2 et 12 et permet de répartir entre les différents actionneurs ou pistons l'effort de poussée nécessaire au déplacement des fluides caloporteurs et donc de mieux compenser les pertes de charge.

En outre, ce piston 8 à double effet sépare les volumes dans lesquels sont disposés les éléments magnétocaloriques 2, 12. Cette configuration permet d'utiliser des fluides caloporteurs différents adaptés à chaque type d'élément magnétocalorique et donc à sa température de fonctionnement. Le fait d'utiliser des fluides différents permet de choisir ces derniers de telle sorte que leur coefficient de transfert thermique et leur viscosité soient adaptés à la température autour de laquelle ils évoluent et donc d'exploiter au maximum les capacités thermiques de chaque élément magnétocalorique 2, 12.

Ainsi, au cours du cycle dans lequel les éléments magnétocaloriques 2, 12 sont activés magnétiquement (cf. fig. 1A), le fluide caloporteur associé au premier élément magnétocalorique 2 est mis en circulation par le piston 7 dans le premier élément magnétocalorique 2, s'échauffe puis traverse la zone de transfert 22 correspondante du moyen d'échange thermique 5 pour arriver dans la chemise du piston 8 à double effet. Simultanément, le fluide caloporteur associé au second élément magnétocalorique 12 sort de la chambre du piston 8 à double effet, traverse l'autre zone de transfert 23 du moyen de transfert d'énergie thermique 5, circule dans le second élément magnétocalorique 12 en direction du piston 7 et s'échauffe. Ainsi, l'énergie thermique du fluide caloporteur associé au premier élément magnétocalorique 2, ci-après dénommé premier fluide caloporteur, est absorbée par le moyen d'échange thermique 5 au travers de la zone de transfert 22, et restituée au fluide caloporteur associé au second élément magnétocalorique 12, ci-après dénommé second fluide caloporteur, au travers de la zone de transfert 23. Le transfert d'énergie thermique est réalisé quasi simultanément, par conduction thermique entre, d'une part, le premier fluide caloporteur et le moyen d'échange thermique 5 et, d'autre part, entre ledit moyen d'échange thermique 5 et le second fluide caloporteur.

Lors du cycle représenté à la figure 1B, dans laquelle les éléments magnétocaloriques 2, 12 sont désactivés magnétiquement, les fluides caloporteurs circulent de la droite vers la gauche tandis que les deux éléments magnétocaloriques 2, 12 se refroidissent. Le second fluide caloporteur échange thermiquement avec la zone de transfert 23 correspondante du moyen d'échange thermique 5 qui, à son tour, échange thermiquement avec le premier fluide caloporteur, au niveau de la zone de transfert 22 correspondante du moyen d'échange thermique 5.

Dans ce générateur thermique 1, les deux éléments magnétocaloriques 2, 12 comportent des matériaux magnétocaloriques différents, la température de Curie du premier élément magnétocalorique 2 étant inférieure à celle du second élément magnétocalorique 12, de sorte que le premier élément magnétocalorique 2 peut par exemple être actif dans une plage de températures négatives et que le second élément magnétocalorique 12 est actif dans une plage de températures positives. Une telle configuration permet d'élargir la plage de fonctionnement du générateur thermique 1.

Bien entendu, l'invention prévoit également la possibilité d'utiliser des éléments magnétocaloriques 2, 12 comportant les mêmes matériaux magnétocaloriques.

Le moyen d'échange thermique 5 reliant deux éléments magnétocaloriques 2, 12 consécutifs dans une structure étagée permet ainsi de transférer l'énergie thermique d'un étage à l'autre sans transfert de fluide et contribue à augmenter le gradient de température d'un étage à l'autre et, par conséquent, le gradient de température entre les extrémités froide 3 et chaude 14 du générateur thermique 1.

Le générateur thermique 1 comporte, en outre, au niveau de ses extrémités opposées 3 et 14 constituées par les extrémités libres des éléments magnétocaloriques 2 et 12, un moyen d'échange 16 permettant de réaliser un échange d'énergie thermique avec un dispositif ou une application extérieur(e). Ces applications extérieures peuvent être l'air environnant le générateur thermique, un dispositif ou une enceinte thermique, par exemple.

Ces moyens d'échange 16 comportent également une zone de transfert 17 réalisée en une matière thermiquement conductrice munie de passages traversants 18 pour le fluide caloporteur et contigüe aux extrémités libres 3, 14 des éléments magnétocaloriques 2, 12 de telle sorte que le fluide caloporteur traverse ladite zone de transfert 17 chaque fois qu'il entre et sort de l'élément magnétocalorique 2, 12. Cette zone de transfert 17 permet donc d'échanger de l'énergie thermique avec le fluide caloporteur à chaque cycle et constitue ainsi un échangeur thermique très efficace. En outre, cette zone de transfert 17 est reliée thermiquement à une application extérieure par l'intermédiaire d'un circuit fermé muni de canaux 19 intégrés dans ledit moyen d'échange 16 et dans lesquels circule un fluide caloporteur associé à l'application extérieure.

Bien entendu, l'invention n'est pas limitée à ce type d'échangeur thermique, tout autre échangeur adapté pouvant être utilisé.

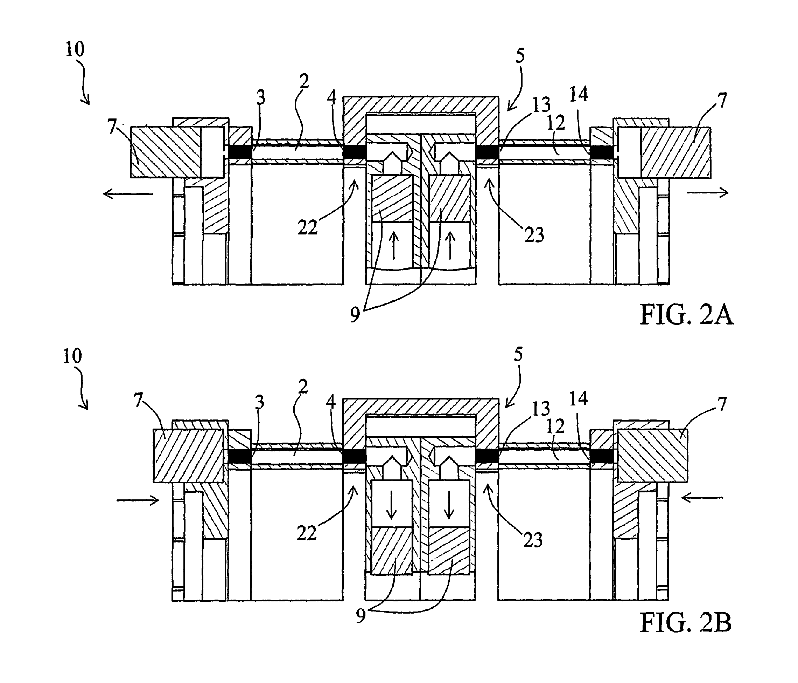

Dans le générateur thermique 10 représenté dans les figures 2A et 2B, les éléments magnétocaloriques 2, 12 sont alignés, consécutifs et toujours dans un cycle différent d'échauffement ou de refroidissement. Ainsi, dans la figure 2A, l'élément magnétocalorique 2 situé à gauche ou premier élément magnétocalorique 2 est désactivé magnétiquement et l'élément magnétocalorique 12 situé à droite ou second élément magnétocalorique 12 est activé magnétiquement. Le fluide caloporteur est mis en circulation vers la gauche dans le premier élément magnétocalorique 2 et vers la droite dans le second élément magnétocalorique 12, dans le sens des flèches représentées. Dans la figure 2B, les éléments magnétocaloriques 2 et 12 sont dans l'état magnétique inverse et le fluide caloporteur est mis en circulation vers la droite dans le premier élément magnétocalorique 2 et vers la gauche dans le second élément magnétocalorique 12.

Le moyen d'échange thermique 5 est le même que celui représenté dans les figures 1A et 1B. Il permet également de réaliser un échange thermique entre les deux fluides caloporteurs circulant dans les éléments magnétocaloriques 2 et 12 consécutifs. Dans ce mode de réalisation, les fluides caloporteurs sont mis en circulation d'une part, au niveau des extrémités libres 3 et 14 des éléments magnétocaloriques 2 et 12, par deux pistons 7 alignés, identiques à ceux implantés dans le générateur thermique 1 des figures 1A et 1B, mais se déplaçant simultanément dans deux sens opposés. De même, la manoeuvre des fluides caloporteurs au niveau des extrémités 4 et 13 consécutives des deux éléments magnétocaloriques 2 et 12 est réalisée par deux pistons 9 à simple effet, distincts, formant les actionneurs centraux et poussant chacun un fluide caloporteur dans l'un des éléments magnétocaloriques 2, 12.

Les zones de transfert 22 et 23 du moyen d'échange thermique 5 sont disposées dans le passage du fluide caloporteur, entre l'extrémité 4, 13 d'un élément magnétocalorique 2, 12 et son piston 9 à simple effet et sont donc traversées de manière simultanée par les fluides caloporteurs à chaque entrée et à chaque sortie des éléments magnétocaloriques 2, 12.

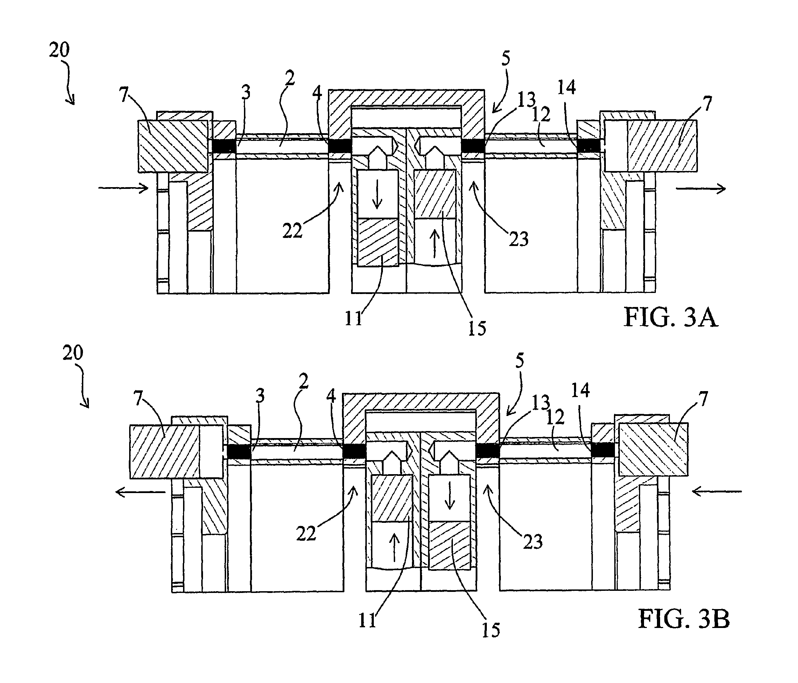

Dans le générateur thermique 20 illustré dans les figures 3A et 3B, le fluide circule de la même manière que dans le générateur thermique 1 des figures 1A et 1B. Toutefois, sa manoeuvre est différente. Le piston 8 à double effet est remplacé par deux pistons 11, 15 à simple effet, reliés chacun fluidiquement à un des éléments magnétocaloriques 2, 12. De ce fait, lorsqu'un piston 11 ou 15 formant un actionneur central aspire le fluide caloporteur de l'élément magnétocalorique 2 ou 12 qui lui correspond, l'autre piston 15 ou 11 pousse le fluide caloporteur dans l'élément magnétocalorique 12 ou 2 qui lui correspond, et inversement.

Dans cette configuration, les zones de transfert 22 et 23 du moyen d'échange thermique 5 sont également disposées dans le passage du fluide caloporteur, entre une extrémité 4, 13 d'un élément magnétocalorique 2, 12 et un piston 11, 15 à simple effet, de manière contigüe à ladite extrémité 4, 13. Elles sont donc traversées de manière simultanée par les fluides caloporteurs à chaque cycle magnétique : d'une part à chaque sortie du premier fluide caloporteur de l'élément magnétocalorique 2 et entrée du second fluide caloporteur dans l'élément magnétocalorique 12 (cf. figure 3A) et, d'autre part à chaque entrée du premier fluide caloporteur dans l'élément magnétocalorique 2 et sortie du second fluide caloporteur de l'élément magnétocalorique 12 (cf. figure 3B).

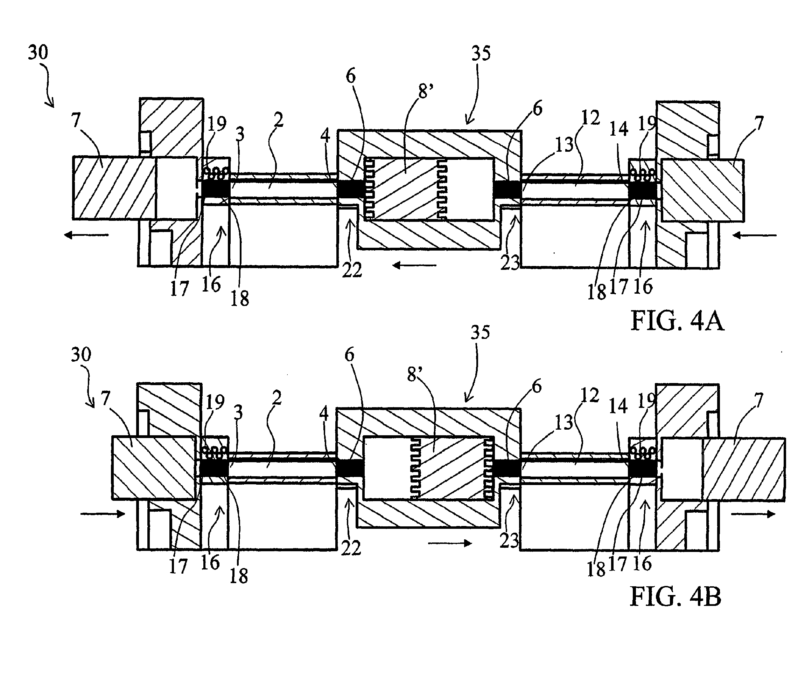

Le générateur thermique 30 représenté dans les figures 4A et 4B constitue une variante de réalisation des figures 1A et 1B dans laquelle le piston central 8' est réalisé en une matière thermiquement conductrice et dont la chemise est formée dans le moyen d'échange thermique 35. De cette manière, l'énergie thermique des fluides caloporteurs circulant dans les deux éléments magnétocaloriques adjacents 2, 12 est échangée à la fois au niveau des zones de transfert 22 et 23 du moyen d'échange thermique 35 et au niveau du piston central 8'. Ce piston central 8' permet de réaliser un échange thermique d'une part, directement entre les deux fluides caloporteurs avec lesquels il est en contact et, d'autre part, avec le moyen d'échange thermique 35 qui lui-même échange thermiquement avec lesdits fluides caloporteurs. Une telle configuration permet d'améliorer encore l'échange thermique entre les deux fluides caloporteurs.

Dans une variante non illustrée et susceptible d'être combinée dans l'un quelconque des modes de réalisation illustrés dans les figures 1A, 1B, 2A, 2B, 3A, 3B et 4A, et 4B, les deux zones de transfert 22 et 23 du moyen d'échange 5, 35 peuvent être reliées entre elles par au moins un caloduc pour assurer l'échange d'énergie thermique entre elles.

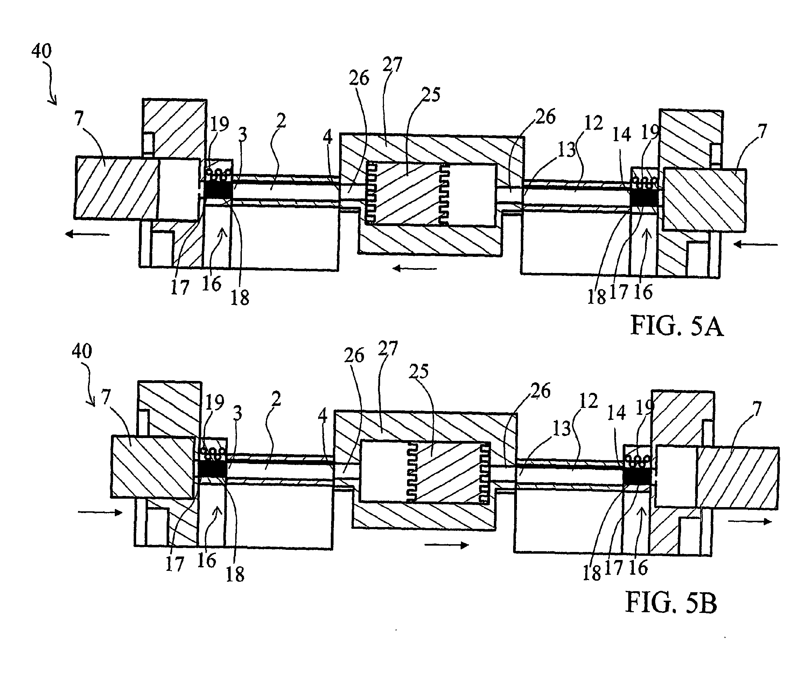

Les figures 5A et 5B représentent un mode de réalisation du générateur thermique 40 dont la structure est sensiblement identique à celle du générateur thermique 30 des figures 4A et 4B et dans lequel le moyen d'échange thermique 25 est réalisé par l'actionneur central situé entre deux éléments magnétocaloriques 2, 12 successifs. Cet actionneur central 25 est un piston à double effet réalisé en un matériau thermiquement conducteur et dont la chemise 27 est réalisée en un matériau thermiquement isolant. Cette chemise 27 présente la même forme que celle du moyen d'échange thermique 35 du générateur thermique 30 des figures 4A et 4B, mais s'en distingue par son matériau constitutif qui est un isolant thermique et par l'absence de zones de transfert remplacées par deux zones de passage 26 pour un fluide caloporteur. Dans cette configuration, l'échange d'énergie thermique entre les deux fluides caloporteurs est réalisé par l'intermédiaire dudit piston central ou piston à double effet 25 en contact avec ces deux fluides caloporteurs.

Pour améliorer encore la capacité d'échange, les pistons centraux 8', 25 des figures 4A, 4B, 5A et 5B peuvent comporter des ailettes sur leurs faces de travail en contact avec un fluide caloporteur.

Dans l'ensemble des générateurs thermiques 1, 10, 20, 30, 40 représentés, un moyen d'échange 16 est à chaque fois intégré aux extrémités froide 3 et chaude 14 desdits générateurs. L'invention n'est toutefois pas limitée à ce type de configuration et s'étend également à des réalisations dans lesquelles seule l'une desdites extrémités froide 3 ou chaude 14 est en relation avec un tel moyen d'échange 16 et/ou ledit moyen d'échange thermique 5, 35 est relié thermiquement à un dispositif ou une application extérieur(e).

En outre, l'invention n'est pas non plus limitée à des générateurs thermiques ne comportant que deux étages d'éléments magnétocaloriques 2, 12 consécutifs. Il peut, en effet, être étendu à plus de deux étages d'éléments magnétocaloriques consécutifs, chaque étage pouvant comporter plusieurs éléments magnétocaloriques adjacents.

Enfin, l'invention n'est pas limitée à l'utilisation de pistons pour réaliser les actionneurs destinés à déplacer les fluides caloporteurs. D'autres types d'actionneurs peuvent être envisagés, telles que des membranes, par exemple.

### Possibilités d'application industrielle :

Il ressort clairement de cette description que l'invention permet d'atteindre les buts fixés, à savoir proposer un générateur thermique 1, 10, 20, 30, 40 de construction simple dans lequel le transfert de l'énergie thermique entre les différents étages d'éléments magnétocaloriques 2, 12 constitutifs est simplifié et réalisé de manière efficace.

Un tel générateur thermique 1, 10, 20, 30, 40 peut trouver une application aussi bien industrielle que domestique dans le domaine du chauffage, de la climatisation, du tempérage, refroidissement ou autres, ce, à des coûts compétitifs, pour un faible encombrement.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Générateur thermique magnétocalorique comprenant au moins deux éléments magnétocaloriques (2, 12) disposés de manière successive et formant au moins deux étages thermiques consécutifs, traversés par des fluides caloporteurs distincts, et comportant chacun deux extrémités opposées (3 et 4, 13 et 14), un arrangement magnétique destiné à soumettre chaque élément magnétocalorique (2, 12) à un champ magnétique variable, créant alternativement, dans chaque élément magnétocalorique (2, 12) un cycle d'échauffement et un cycle de refroidissement, un moyen d'entraînement (7, 8, 8', 9, 11, 15, 25) desdits fluides caloporteurs à travers lesdits éléments magnétocaloriques alternativement en direction d'une extrémité et en direction de l'extrémité opposée et inversement, de manière synchronisée avec la variation du champ magnétique, générateur thermique (1, 10, 20, 30, 40) **caractérisé en ce que** lesdits éléments magnétocaloriques (2, 12) sont reliés deux à deux thermiquement au niveau de leurs extrémités consécutives (4, 13) par l'intermédiaire d'un moyen d'échange thermique (5, 25, 35) en contact thermique respectivement avec le fluide caloporteur circulant dans le premier (2) desdits éléments magnétocaloriques et avec le fluide caloporteur circulant dans le second (12) desdits éléments magnétocaloriques.

2. Générateur thermique, selon la revendication 1, **caractérisé en ce que** ledit moyen d'échange thermique (5, 35) comporte deux zones de transfert (22, 23) reliées thermiquement entre elles et traversées respectivement par le fluide caloporteur de chacun desdits éléments magnétocaloriques (2,12).

3. Générateur thermique, selon la revendication 2, **caractérisé en ce que** lesdites zones de transfert (22, 23) sont disposées de manière contigüe aux extrémités (4, 13) consécutives des deux éléments magnétocaloriques (2,12) consécutifs.

4. Générateur thermique, selon l'une quelconque des revendications 2 et 3, **caractérisé en ce que** les zones de transfert (22, 23) sont réalisées en une matière thermiquement conductrice et sont munies de passages traversants (6) pour le fluide caloporteur.

5. Générateur thermique, selon l'une quelconque des revendications 2 à 4, **caractérisé en ce que** les deux zones de transfert (22, 23) dudit moyen d'échange thermique (5, 35) sont reliées entre elles par un corps en une matière thermiquement conductrice.

6. Générateur thermique, selon la revendication 5, **caractérisé en ce que** les deux zones de transfert (22, 23) dudit moyen d'échange thermique (5, 35) sont reliées entre elles par au moins un caloduc.

7. Générateur thermique, selon l'une quelconque des revendications précédentes, **caractérisé en ce que** le moyen d'entraînement des fluides caloporteurs comporte un actionneur (8, 8', 25) central, relié fluidiquement aux extrémités consécutives (4,13) desdits éléments magnétocaloriques (2, 12), et deux actionneurs (7) d'extrémité montés chacun en regard de l'une des extrémités libres (3, 14) desdits éléments magnétocaloriques (2, 12).

8. Générateur thermique, selon la revendication 7, **caractérisé en ce que** ledit actionneur (25) central est réalisé en un matériau thermiquement conducteur et est en contact avec ledit moyen d'échange thermique (5).

9. Générateur thermique, selon la revendication 7, **caractérisé en ce que** ledit actionneur (8') central est un piston à double effet réalisé en un matériau thermiquement conducteur et dont la chemise est réalisée en un matériau thermiquement isolant et **en ce qu'**il constitue ledit moyen d'échange thermique.

10. Générateur thermique, selon l'une quelconque des revendications 1 à 6, **caractérisé en ce que** le moyen d'entraînement des fluides caloporteurs comporte deux actionneurs (9 ; 11 et 15) centraux, reliés fluidiquement chacun à l'une des extrémités consécutives (4, 13) desdits éléments magnétocaloriques (2, 12), et deux actionneurs (7) d'extrémité reliés fluidiquement chacun à l'une des extrémités libres (3, 14) desdits éléments magnétocaloriques (2, 12).

11. Générateur thermique, selon l'une quelconque des revendications 7 et 10, **caractérisé en ce que** lesdits moyens de déplacement (7, 9, 11, 15, 8, 8', 25) sont des pistons choisis parmi le groupe comportant des pistons à simple effet (7, 9, 11, 15) et des pistons à double effet (8, 8', 25).

12. Générateur thermique, selon la revendication 10, **caractérisé en ce qu'**il comporte un arrangement magnétique apte à assujettir lesdits éléments magnétocaloriques (2, 12) successifs constamment dans deux cycles différents.

13. Générateur thermique, selon la revendication 7, **caractérisé en ce qu'**il comporte un arrangement magnétique apte à assujettir lesdits éléments magnétocaloriques (2, 12) successifs constamment dans les mêmes cycles.

14. Générateur thermique, selon l'une quelconque des revendications précédentes, **caractérisé en ce que** les fluides caloporteurs traversant lesdits éléments magnétocaloriques (2, 12) présentent une composition chimique et/ou des propriétés thermiques différentes.

## Claims

1. Magnetocaloric heat generator comprising at least two magnetocaloric elements (2. 12) arranged in succession and making up at least two consecutive thermal stages crossed by separate heat transfer fluids and comprising each two opposite ends (3 and 4. 13 and 14). a magnetic arrangement intended for subjecting each magnetocaloric element (2, 12) to a variable magnetic field, creating alternately in each magnetocaloric element (2, 12) a heating cycle and a cooling cycle, a means (7, 8, 8', 9, 11, 15, 25) for circulating said heat transfer fluids through said magnetocaloric elements alternately towards one end and towards the opposite end and vice versa, in synchronisation with the variation of the magnetic field, heat generator (1, 10, 20, 30, 40) **characterised in that** that said magnetocaloric elements (2, 12) are connected thermally two by two at their consecutive ends (4, 13) through the intermediary of a heat exchange means (5, 25, 35) in thermal contact respectively with the heat transfer fluid circulating in the first (2) of said magnetocaloric elements and with the heat transfer fluid circulating in the second (12) of said magnetocaloric elements.

2. Heat generator according to claim 1, **characterised in that** said heat exchange means (5, 35) comprises two transfer zones (22, 23) connected thermally with each other and crossed respectively by the heat transfer fluid of each of said magnetocaloric elements (2, 12).

3. Heat generator according to claim 2, **characterised in that** said transfer zones (22, 23) are arranged contiguously with the corresponding ends (4, 13) of the two consecutive magnetocaloric elements (2, 12).

4. Heat generator according to any of claims 3 and 4, **characterised in that** the transfer zones (22, 23) are made out of a heat conducting material and have through passages (6) for the heat transfer fluid.

5. Heat generator according to any of claims 2 to 4, **characterised in that** the two transfer zones (22, 23) of said heat exchange means (5, 35) are connected with each other by means of a body out of a heat conducting material.

6. Heat generator according to claim 5, **characterised in that** the two transfer zones (22. 23) of said heat exchange means (5, 35) are connected with each other by means of at least one heat pipe.

7. Heat generator according to any of the previous claims, **characterised in that** the means for moving the heat transfer fluids comprises a central actuator (8, 8', 25) in fluidic connection with the consecutive ends (4, 13) of said magnetocaloric elements (2, 12) and two end actuators (7) mounted each in front of one of the free ends (3, 14) of said magnetocaloric elements (2, 12).

8. Heat generator according to claim 7, **characterised in that** said central actuator (25) is made out of a heat conducting material and is in contact with said heat exchange means (5).

9. Heat generator according to claim 7, **characterised in that** said central actuator (8') is a double action piston made out of a heat conducting material and whose liner is made out of a heat insulating material, and **in that** it makes up said heat exchange means.

10. Heat generator according to any of claims 1 to 6, **characterised in that** the means for moving the heat transfer fluids comprises two central actuators (9 ; 11 and 15), each in fluidic connection with one of the consecutive ends (4, 13) of said magnetocaloric elements (2, 12), and two end actuators (7), each in fluidic connection with one of the free ends (3, 14) of said magnetocaloric elements (2, 12)

11. Heat generator according to any of claims 7 and 10, **characterised in that** said means for moving (7, 9. 11, 15, 8. 8'. 25) are pistons chosen among the group comprising single action pistons (7. 9, 11, 15) and double action pistons (8, 8', 25).

12. Heat generator according to claim 10, **characterised in that** it comprises a magnetic arrangement capable of subjecting said successive magnetocaloric elements (2, 12) constantly in two different cycles.

13. Heat generator according to claim 7, **characterised in that** it comprises a magnetic arrangement capable of subjecting said successive magnetocaloric elements (2, 12) constantly in the same cycles.

14. Heat generator according to any of the previous claims, **characterised in that** the heat transfer fluids passing through said magnetocaloric elements (2, 12) have a different chemical composition and/or different thermal properties.

## Patentansprüche

1. Magnetokatorischer Wärmeerzeuger, bestehend aus mindestens zwei nacheinander angeordneten und mindestens zwei aufeinanderfolgende Wärmeerzeugungsstufen bildenden magnetokalorischen Elementen (2, 12), die von getrennten Wärmeübertragungsfluiden durchströmt werden, und die jeweils zwei entgegen gesetzte Enden (3 und 4, 13 und 14) betragen, einer magnetischen Anordnung, die dazu bestimmt ist, jedes magnetokalorische Element (2, 12) einem variablen Magnetfeld auszusetzen, wodurch in jedem magnetokalorischen Element (2, 12) abwechselnd ein Heiz-Zyklus und ein Kühl-Zyklus erzeugt wird, ein Mittel (7, 8, 8', 9, 11, 15, 25) zum mit der Variation des Magnetfelds synchronisierten Antreiben der besagten Wärmeübertragungsfluide durch die besagten magnetokalorischen Elemente hindurch, abwechselnd in Richtung eines Endes und in Richtung des entgegen gesetzten Endes und umgekehrt, **dadurch gekennzeichnete**r Wärmeerzeuger (1, 10, 20, 30, 40), dass die besagten magnetokalorischen Elemente (2, 12) an ihren aufeinanderfolgenden Enden (4, 13) paarweise thermisch verbunden sind durch ein Wärmeaustauschmittel (5, 25, 35), das mit dem in dem ersten (2) der besagten magnetokalorischen Elemente fließenden Wärmeübertragungsfluid bzw. mit dem in dem zweiten (12) der besagten magnetokalorischen Elemente fließenden Wärmeübertragungsfluid in thermischem Kontakt steht.

2. Wärmeerzeuger nach Anspruch 1, **dadurch gekennzeichnet, dass** das besagte Wärmeaustauschmittel (5, 35) zwei thermisch miteinander verbundene Übertragungsbereiche (22, 23) aufweist, die jeweils durch das Wärmeübertragungsfluid jedes der besagten magnetokalorischen Elemente (2, 12) durchströmt werden.

3. Wärmeerzeuger nach Anspruch 2, **dadurch gekennzeichnet, dass** die besagten Übertragungsbereiche (22, 23) an den aufeinanderfolgenden Enden (4. 13) der beiden aufeinanderfolgenden magnetokalorischen Elemente (2. 12) aneinandergrenzend angeordnet sind.

4. Wärmeerzeuger nach einem beliebigen der Ansprüche 2 und 3, **dadurch gekennzeichnet, dass** die Übertragungsbereiche (22, 23) aus einem wärmeleitenden Material hergestellt sind und durchgehend Öffnungen (6) für das Wärmeübertragungsfluid aufweisen.

5. Wärmeerzeuger nach einem beliebigen der Ansprüche 2 bis 4, **dadurch gekennzeichnet, dass** die beiden Übertragungsbereiche (22, 23) des besagten Wärmeaustauschmittels (5, 35) durch einen Körper aus einem wärmeleitenden Material miteinander verbunden sind.

6. Wärmeerzeuger nach Anspruch 5, **dadurch gekennzeichnet, dass** die beiden Übertragungsbereiche (22, 23) des besagten Wärmeaustauschmittels (5, 35) durch mindestens ein Wärmerohr verbunden sind.

7. Wärmeerzeuger nach einem beliebigen der vorhergehenden Ansprüche, **dadurch gekennzeichnet, dass** das Mittel zum Antreiben der Wärmeübertragungsfluide ein zentrales Betätigungsmittel (8, 8', 25) beträgt, das mit den aufeinanderfolgenden Enden (4, 13) der besagten magnetokalorischen Elemente (2, 12) in Fluidverbindung steht, und zwei End-Betätigungsmittel (7), die jeweils an einem der freien Enden (3, 14) der besagten magnetokalorischen Elemente (2, 12) montiert sind.

8. Wärmeerzeuger nach Anspruch 7, **dadurch gekennzeichnet, dass** das besagte zentrale Betätigungsmittel (25) aus einem wämieleitenden Material hergestellt ist und mit dem besagten Wärmeaustauschmittel (5) in Kontakt ist,

9. Wärmeerzeuger nach Anspruch 7, **dadurch gekennzeichnet, dass** das besagte zentrale Betätigungsmittel (8') ein doppelwirkender Kolben ist, der aus einem wärmeleitenden Material hergestellt ist und dessen Mantel aus einem wärmedämmenden Material hergestellt ist, und dadurch, dass es das besagte Wärmeaustauschmittel bildet.

10. Wärmeerzeuger nach einem beliebigen der Ansprüche 1 bis 6. **dadurch gekennzeichnet, dass** das Mittel zum Antreiben der Wärmeübertragungsfluide zwei zentrale Betätigungsmittel (9 ; 11 et 15) beiträgt, die jeweils mit einem der aufeinanderfolgenden Enden (4, 13) der besagten magnetokalorischen Elemente (2. 12) in Fluidverbindung stehen, und zwei End-Betätigungsmittel (7), die jeweils mit einem der freien Enden (3, 14) der besagten magnetokalorischen Elemente (2, 12) in Fluidverbindung stehen.

11. Wärmeerzeuger nach einem beliebigen der Ansprüche 7 und 10, **dadurch gekennzeichnet, dass** die besagten Mittel zum Antreiben (7, 9, 11, 15, 8, 8', 25) Kolben sind, die in der Gruppe bestehend aus den einfachwirkenden Kolben (7, 9, 11, 15) und den doppelwirkenden Kolben (8, 8', 25) gewählt werden.

12. Wärmeerzeuger nach Anspruch 10, **dadurch gekennzeichnet, dass** er eine magnetische Anordnung beträgt, die die besagten aufeinanderfolgenden magnetokalorischen Elemente (2, 12) ständig in zwei verschiedenen Zyklen betreiben kann.

13. Wärmeerzeuger nach Anspruch 7, **dadurch gekennzeichnet, dass** er eine magnetische Anordnung beträgt, die die besagten aufeinanderfolgenden magnetokalorischen Elemente (2, 12) ständig in denselben Zyklen betreiben kann.

14. Wärmeerzeuger nach einem beliebigen der vorhergehenden Ansprüche, **dadurch gekennzeichnet, dass** die Wärmeübertragungsfluide, die die besagten magnetokalorischen Elemente (2, 12) durchströmen verschiedene chemische Zusammensetzungen und/oder thermische Eigenschaften aufweisen.
